# EUROPÄISCHE PATENTANMELDUNG

(11) **EP 0 888 862 A1**
(43) Veröffentlichungstag der Anmeldung: **07.01.1999**
(21) Anmeldenummer: 97111230.5
(22) Anmeldetag: 03.07.1997
(51) Int. Cl.: B29C 49/00, B29C 49/48

(54) **Verfahren zur Herstellung eines Behälters mit Griff**

(71) Anmelder: Ast Kunststoffverarbeitung GmbH, 57339 Erndtebrück (DE)
(72) Erfinder: Strohmann,Albrecht, 57339 Erndtebrück (DE)
(74) Vertreter: Flosdorff, Jürgen, Dr.

(57) **Zusammenfassung**

Ein Behälter mit Griff wird in der Weise hergestellt, daß ein extrudierter Kunststoffschlauch in eine Blasform aufgenommen wird, wobei beim Schließen der Blasform wenigstens ein Verbindungsbereich zwischen dem den Tragebereich des Griffs bildenden Schlauchabschnitt und dem den Behälter bildenden übrigen Schlauch wenigstens teilweise geöffnet bleibt. Vorblasluft oder Blasluft strömt aus dem auszubildenden Behälter durch einen Durchlaßkanal des wenigstens einen Verbindungsbereichs in den Tragebereich des Griffs und bläst diesen auf. Anschließend wird der wenigstens eine Verbindungsbereich durch Schweißstempel geschlossen.

## Beschreibung

Die Erfindung betrifft ein Verfahren zur Herstellung eines Behälters mit wenigstens einem Griff, bei dem ein extrudierter Kunststoffschlauch in eine Blasform aufgenommen und beim Schließen der Blasform ein den Tragebereich des wenigstens einen Griffs bildender Abschnitt des Schlauches von dem übrigen Schlauch abgequetscht wird und durch Einführen eines Blasmediums der übrige Schlauch zu dem Kohlkörper aufgeblasen wird.

Bei dem Behälter kann es sich beispielsweise um einen Kanister handeln, ohne daß die Erfindung hierauf beschränkt ist. Die Erfindung ist auch nicht darauf beschränkt, daß der Behälter nur einen einzigen Griff hat, sondern sie ist auch für solche Behälter anwendbar, die mit zwei oder mehr Griffen versehen sind, was beispielsweise bei großen, schweren Behältern der Fall sein kann.

Wenn ein Kanister nach seiner Entleerung wiederverwendet werden soll, kann es je nach der Art des Füllmaterials erforderlich sei, den Kanister zuvor gründlich zu reinigen. Dies geschieht dann, wenn eine große Anzahl beispielsweise von Gefahrgutkanistern erneut verwendet werden soll, mittels Spülmaschinen, die einen Heißreinigungsvorgang ausführen. Dabei ist es in aller Regel unabdingbar, daß in den gereinigten Kanistern keine Rückstände von Reinigungsmitteln zurückbleiben. Aus diesem Grund darf der Griff keinen Hohlraum haben, der mit dem Innenraum des Behälters in Verbindung steht, da anderenfalls Reinigungsflüssigkeit und/oder Reste des früheren Behälterinhalts dort zurückbleiben könnten, die sich nicht vollständig entfernen lassen.

Zur Herstellung eines Behälters mit einem derartigen Griff ist es bekannt, die Griffpartie des Behälters in der Weise auszubilden, daß sie vollständig mit Material gefüllt ist. Bei dieser Vorgehensweise wird ein hoher Materialanteil benötigt, um die Griffpartie zu einem vollständig massiven Körper quetschen zu können. Außerdem erfordert dies infolge der großen Materialansammlung eine relativ lange Auskühlzeit, wobei sich zudem Einfallstellen an den Seitenflächen des Kanisters einstellen können.

Ein weiteres bekanntes Verfahren besteht darin, den Griff an den beiden seitlichen Verbindungsbereichen mit dem Behälter abzuquetschen und den dazwischenliegenden Tragebereich mittels Blasdorn oder Blasnadel aufzublasen. Hierbei stellen sich häufig Probleme mit der Blasnadel ein, die zum Verstopfen durch Kunststoffmaterial neigt. Außerdem ist nicht gewährleistet, daß der durch das Schließen der Blasform zusammengelegte Schlauchabschnitt immer genau getroffen wird, was zu einem hohen Anteil unbrauchbarer Behälter führen kann. Häufig wird auch die Blasnadelspitze verbogen.

Ein weiterer Nachteil dieses Verfahrens ist, daß der hohle Tragebereich des Griffs infolge des Einstechens der Blasnadel ein Loch enthält, in das beim Spülen des Behälters Reinigungsflüssigkeit eintreten kann. Hierdurch wird zwar das Füllmaterial nicht beeinträchtigt, jedoch kann dies zu Unannehmlichkeiten bei der Handhabung des Behälters führen.

Es ist auch bekannt, den Tragebereich eines Griffs durch Vakuum aufzuweiten. Dies ist aber nur bei einer geringen Wandstärke des Griffs möglich.

Der vorliegenden Erfindung liegt die Aufgabe zugrunde, ein Verfahren zur Herstellung des Behälters mit Griff anzugeben, bei dem die oben beschriebenen Nachteile vermieden sind.

Diese Aufgabe wird erfindungsgemäß durch die Merkmale des Patentanspruchs 1 gelöst.

Vorteilhafte Ausgestaltungen des erfindungsgemäßen Verfahrens sind in den Unteransprüchen gekennzeichnet.

Die Erfindung sieht vor, daß beim Schließen der Blasform wenigstens ein Verbindungsbereich zwischen dem den Tragebereich des Griffs bildenden Schlauchabschnitt und dem den Behälter bildenden übrigen Schlauch derart geöffnet bleibt, daß Druckmedium aus dem Schlauch bzw. dem Innenraum des auszubildenden Behälters durch den wenigstens einen Verbindungsbereich strömen kann und den Tragebereich des Griffs aufbläst, woraufhin der wenigstens eine Verbindungsbereich geschlossen wird. Dabei ist bevorzugt, daß bei dem Formschluß ein Teil des Verbindungsbereichs des Griffs abgequetscht und zu einem querschnittlich geschlossenen Steg geformt wird, während ein verbleibender Durchlaßkanal zwischen dem auszubildenden Tragebereich des Griffs und dem auszubildenden Behälter soweit geöffnet ist, daß das Druckmedium hindurchströmen kann. Auf diese Weise läßt sich eine stabile Befestigung des Griffs am Behälter gewährleisten, und das Schließen des Durchlaßkanals nach dem Ausformen des Tragebereichs des Griffs ist erleichtert.

Der durch den wenigstens einen Verbindungsbereich führende Kanal wird vorzugsweise geschlossen, während sich der herzustellende Gegenstand noch in der Blasform befindet. Hierzu sind nach einem weiteren Vorschlag der Erfindung in der Blasform Schweißstempel angeordnet, die nach dem Ausformen des Tragebereichs des Griffs geschlossen werden und den wenigstens einen Durchlaßkanal abquetschen. Die Schweißstempel bilden dabei bevorzugt an beiden Seiten des Durchlaßkanals eine etwa kreiszylindrische Vertiefung aus, die so bemessen ist, daß der verbleibende Rand um die Vertiefungen einen Vollquerschnitt erhält. Dies erhöht die Festigkeit des nun vollständig verschlossenen Verbindungsbereichs. Es können auch Schweißstempel anderer Form verwendet werden.

Als Druckmedium kann Vorblasluft verwendet werden, wenn diese zum Aufblasen des Tragebereichs des Griffes einen ausreichend hohen Druck hat, was auch von dem verwendeten Material, der Wandstärke des Griffs und dessen Geometrie abhängt. Wenn die Vorblasluft den Tragebereich des Griffs aufgeblasen hat, wird der Verbindungsbereich auf die oben beschriebene Weise verschlossen, woraufhin die eigentliche Blasluft ins Innere des Schlauches eingeführt wird, um den Behälter auszuformen.

Es liegt aber auch im Rahmen der Erfindung, daß als Druckmedium Blasluft verwendet wird, wobei vorzugsweise während des Blasvorgangs der wenigstens eine Durchlaßkanal zum Tragebereich des Griffs verschlossen wird, um Überdruck in diesem zu vermeiden.

In vielen Fällen wird es zweckmäßig sein, nur einen Verbindungsbereich zum Aufblasen des Tragebereichs des Griffs geöffnet zu halten, während der andere Verbindungsbereich durch Formschluß abgequetscht und damit verschlossen wird. Es kann aber auch vorgesehen sein, daß beide seitlichen Verbindungsbereiche beim Schließen der Blasform teilweise geöffnet bleiben.

Weitere Einzelheiten der Erfindung ergeben sich aus der nachfolgenden Beschreibung sowie anhand der Zeichnung. Dabei zeigen:
- Fig. 1: eine Seitenansicht des oberen Teils eines nach dem erfindungsgemäßen Verfahren hergestellten Kanisters;
- Fig. 2: einen Schnitt L-L durch den linken Verbindungsbereich zwischen dem Griff und dem Kanister mit geöffneten Verbindungskanal;
- Fig. 3: einen Schnitt L-L durch den Verbindungsbereich gemäß Fig. 2 beim Schließen der Schweißstempel;
- Fig. 4: einen Schnitt L-L durch den Verbindungsbereich gemäß Fig. 2 des fertigen Behälters;
- Fig. 5: einen Schnitt E-E in Fig. 1;
- Fig. 6: einen Schnitt M-M in Fig. 1 durch den rechten Verbindungsbereich und
- Fig. 7: einen Schnitt G-G in Fig. 1 durch den rechten Verbindungsbereich.

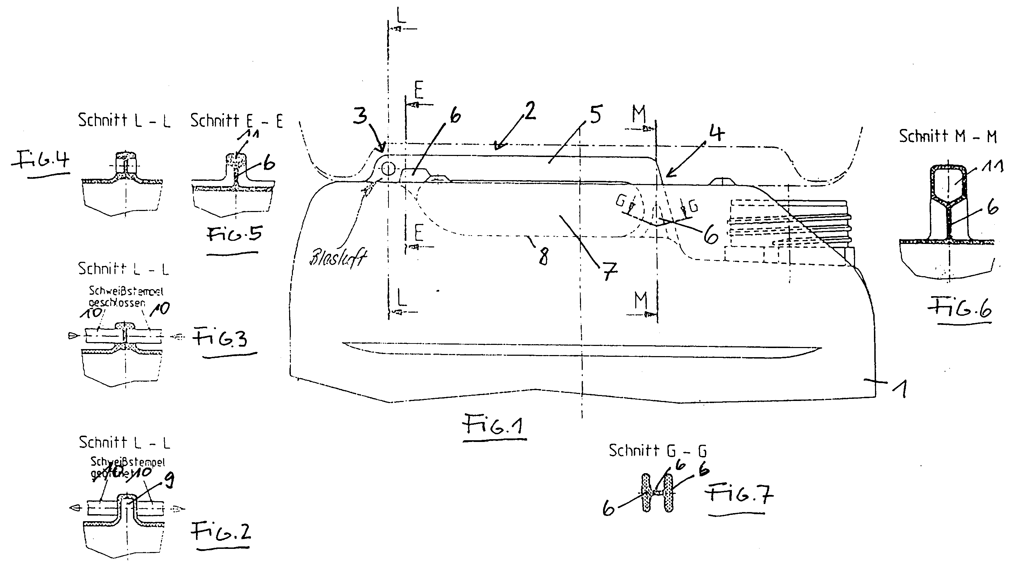

Der in Fig. 1 dargestellte Kanister 1, von dem nur der obere Kopfabschnitt gezeigt ist, enthält einen Griff 2, der über einen in der Figur linken Verbindungsbereich 3 und einen rechten Verbindungsbereich 4 an dem eigentlichen Kanister 1 angeformt ist. Zwischen den Verbindungsbereichen 3, 4 befindet sich der Tragebereich 5 des Griffs 2, der als Hohlkörper aufgeblasen ist.

Der Kanister 1 wird aus einem extrudierten Kunststoffschlauch im Blasverfahren hergestellt, wobei der Kunststoffschlauch in eine nicht dargestellte Blasform aufgenommen wird, bei deren Schließen ein Teil der Verbindungsbereiche 3 und 4 so abgequetscht werden, daß Wandabschnitte bzw. Stege 6 mit geschlossenem Querschnitt entstehen. Außerdem wird der Zwischenbereich 7 zwischen dem Tragebereich 5 des Griffs 2 und der oberen Wand 8 des Kanisters 1 so abgequetscht, daß dieser Bereich nach Entnahme des Kanisters aus der Blasform entfernt werden kann.

Während der rechte Verbindungsbereich 4 des Griffs 2 beim Schließen der Blasform vollständig verschlossen wird, so daß keine Verbindung zwischen dem Innenraum des auszubildenden Tragebereichs 5 und dem Innenraum des Kanisters 1 besteht, wie Fig. 7 zeigt, verbleibt beim Schließen der Blasform in dem linken Verbindungsbereich 3 ein ungequetschter Durchlaßkanal 9, wie Fig. 2 zeigt. In diesem Zustand sind Schweißstempel 10 in der Blasform geöffnet, wie in der Fig. 2 schematisch angedeutet ist.

Durch den Durchlaßkanal 9 tritt Vorblasluft oder Blasluft aus dem Inneren des auszubildenden Kanisters 1 in den Tragebereich 5 des Griffs 2 ein und bläst diesen auf, bis er sich an die Wände des zugehörigen Formnestes anlegt. Hierdurch wird ein durchgehender Hohlkörper 11 in dem Griff 2 ausgebildet, der auch aus den Figuren 5 und 6 ersichtlich ist.

Nach Ausformung des hohlen Griffs 2 werden die Schweißstempel 10 geschlossen (Fig. 3), wodurch der Durchlaßkanal 9 vollständig verschlossen wird. Dies ist in Fig. 4 für den Schnitt L-L dargestellt und trifft auch für andere Schnitte durch denselben Bereich zu.

Der Hohlraum 11 des Griffs 2 ist vollständig vom Innenraum des Kanisters 1 getrennt, so daß aus dem Kanister 1 kein Füllmaterial oder Reinigungsmittel ins Innere des Griffs 2 gelangen kann.

## Patentansprüche

1. Verfahren zur Herstellung eines Behälters mit Griff, bei dem ein extrudierter Schlauch aus einem Kunststoff in eine Blasform aufgenommen und beim Schließen der Blasform ein den Tragebereich des Griffs bildender Abschnitt des Schlauches von dem übrigen Schlauch abgequetscht wird und durch Einführen eines Mediums der übrige Schlauch zu dem Behälter aufgeblasen wird,
**dadurch gekennzeichnet,**
daß beim Schließen der Blasform wenigstens ein Verbindungsbereich zwischen dem den Tragebereich des Griffs bildenden Schlauchabschnitt und dem den Behälter bildenden übrigen Schlauch derart geöffnet bleibt, daß Druckmedium aus dem auszubildenden Behälter durch den wenigstens einen Verbindungsbereich strömt und den Tragebereich des Griffs aufbläst, und daß anschließend der wenigstens eine Verbindungsbereich geschlossen wird.

2. Verfahren nach Anspruch 1,
dadurch gekennzeichnet, daß als Druckmedium Vorblasluft verwendet wird.

3. Verfahren nach Anspruch 1,
dadurch gekennzeichnet, daß als Druckmedium Blasluft verwendet wird.

4. Verfahren nach einem der Ansprüche 1 bis 3,
dadurch gekennzeichnet, daß der durch den wenigstens einen Verbindungsbereich führende Durchlaßkanal innerhalb der Blasform geschlossen wird.

5. Verfahren nach Anspruch 4,
dadurch gekennzeichnet, daß der durch den wenigstens einen Verbindungsbereich führende Durchlaßkanal durch Schweißstempel geschlossen wird, die in der Blasform angeordnet sind.

6. Verfahren nach Anspruch 5,
dadurch gekennzeichnet, daß die Schweißstempel hydraulisch oder pneumatisch betätigt werden.

7. Verfahren nach einem der Ansprüche 1 bis 6,
dadurch gekennzeichnet, daß beide Verbindungsbereiche des Griffs beim Schließen der Blasform wenigstens teilweise geöffnet bleiben.

8. Im Blasverfahren hergestellter Behälter mit Griff,
dadurch gekennzeichnet, daß der Tragebereich (5) des Griffs (2) durch ein Druckmedium aufgeblasen ist, das durch einen Durchlaßkanal (9) wenigstens eines Verbindungsbereichs (3,4) des Griffs (2) mit dem Behälter (1) in den Tragebereich eingeströmt ist, und daß der wenigstens eine Durchlaßkanal (9) verschlossen ist.
